(19) Europäisches Patentamt
European Patent Office
Office européen des brevets

(11) **EP 3 678 037 A1**

(12) **EUROPEAN PATENT APPLICATION**

(43) Date of publication:
08.07.2020 Bulletin 2020/28

(51) Int Cl.:
*G06F 17/16* $^{(2006.01)}$

(21) Application number: 19215331.0

(22) Date of filing: 11.12.2019

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.12.2018   US 201816237508**

(71) Applicant: **Nvidia Corporation**
**Santa Clara, CA 95051 (US)**

(72) Inventors:
• **Drozdowski, Marek**
**Santa Clara, CA 95051 (US)**
• **Villmow, Micah**
**Santa Clara, CA 95051 (US)**

(74) Representative: **Kraus & Weisert**
**Patentanwälte PartGmbB**
**Thomas-Wimmer-Ring 15**
**80539 München (DE)**

(54) **NEURAL NETWORK GENERATOR**

(57)    A neural network is a collection of interconnected nodes, where each of the nodes processes input data and outputs a result of the processing to any other nodes connected to it. The neural network is typically composed of various layers that perform different processing tasks on their inputs. Systems, methods, and computer program products are provided for generating one or more functional layers in a neural network.

*Fig. 1*

EP 3 678 037 A1

INPUT NODE
208

X1=25→
[5,5]

X1

X2

X4

X3

OUTPUT NODE
210

X2=5→
[1,1,1,5]

X4=36→
[18,2]

X3=10→
[2,1,5]

DIRECTED GRAPH
206

*Fig. 2D*

**Description**

<u>TECHNICAL FIELD</u>

One embodiment relates to generating a neural network.

<u>BACKGROUND</u>

In general, a neural network is a collection of interconnected nodes, where each of the nodes processes input data and outputs a result of the processing to any other nodes connected to it. The neural network is typically composed of various layers that perform different processing tasks on their inputs. Unfortunately, current techniques to generate neural networks generally use tedious processes that may not guarantee a valid working result. There is a need for addressing these issues and/or other issues associated with the prior art.

<u>BRIEF DESCRIPTION OF THE DRAWINGS</u>

Figure **1** illustrates a flowchart of a method for generating at least a portion of a neural network, in accordance with one embodiment.

Figure **2A** illustrates a diagram of a directed graph representation of a portion of a neural network constructed from a matrix, in accordance with one embodiment.

Figure **2B** illustrates the directed graph representation of Figure **2A** with input and output nodes connected to the portion of the neural network, in accordance with one embodiment.

Figure **2C** illustrates the directed graph representation of Figure **2B** with an indication of calculated node volumes, in accordance with one embodiment.

Figure **2D** illustrates the directed graph representation of Figure **2C** with an indication of determined node dimensions, in accordance with one embodiment.

Figure **2E** illustrates a function for the connection between node X1 and node X2 in the directed graph representation of Figure **2D,** in accordance with one embodiment.

Figure **2F** a function for the connection between node X2 and node X3 in the directed graph representation of Figure **2D,** in accordance with one embodiment.

Figure **2G** illustrates an exemplary neural network portion resulting, in part, from the function in Figure **2E** and the function in Figure **2F,** in accordance with one embodiment.

Figure **2H** illustrates a directed graph representation of a sub-graph constructed from a matrix for the portion of the neural network of Figure **2G,** in accordance with one embodiment.

Figure **2I** illustrates the directed graph representation of Figure **2H** with an indication of calculated node volumes and determined node dimensions, in accordance with one embodiment.

Figure **3** illustrates a parallel processing unit, in accordance with an embodiment.

Figure **4A** illustrates a general processing cluster within the parallel processing unit of Figure **3,** in accordance with an embodiment.

Figure **4B** illustrates a memory partition unit of the parallel processing unit of Figure **3,** in accordance with an embodiment.

Figure **5A** illustrates the streaming multi-processor of Figure **4A,** in accordance with an embodiment.

Figure **5B** is a conceptual diagram of a processing system implemented using the PPU of Figure **3,** in accordance with an embodiment.

Figure **5C** illustrates an exemplary system in which the various architecture and/or functionality of the various previous embodiments may be implemented.

Figure **6** is a conceptual diagram of a graphics processing pipeline implemented by the PPU of Figure **3,** in accordance with an embodiment.

## DETAILED DESCRIPTION

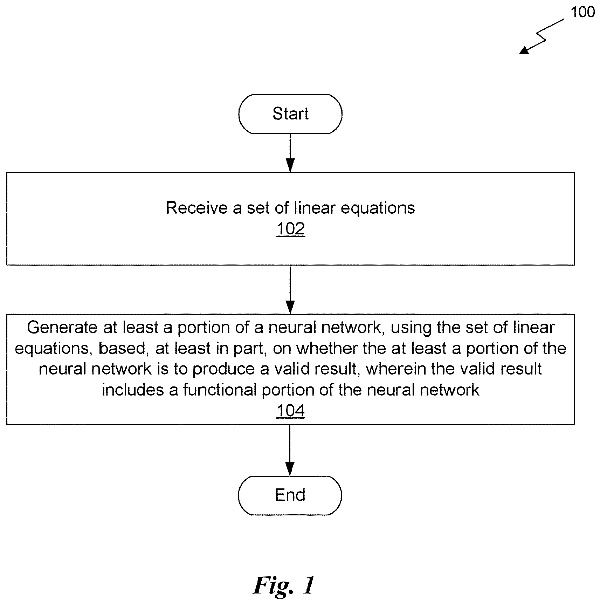

Figure **1** illustrates a flowchart of a method **100** for generating at least a portion of a neural network, in accordance with one embodiment. The "portion" of the neural network described hereinbelow may refer to a sub-part of the neural network that is connected to one or more other sub-parts of the neural network, or to an entirety of the neural network. In one embodiment, the method **100** may be performed by one or more processing units, and/or may also be performed by a program, custom circuitry, or by a combination thereof. In one embodiment, the method **100** may be executed by a GPU (graphics processing unit), CPU (central processing unit), or any processor capable of performing arithmetic computations, such as those described below with reference to one or more of the remaining Figures. Furthermore, persons of ordinary skill in the art will understand that any system that performs method **100** is within the scope and spirit of embodiments described herein.

In operation **102,** a set of linear equations are received as input. In one embodiment, the set of linear equations includes integer linear equations. In one embodiment, a number of linear equations in the set of linear equations is equal to a number of anchor nodes to be included in the portion of the neural network to be generated using the set of linear equations. In one embodiment, each linear equation in the set of linear equations includes a plurality of variables each representative of a corresponding anchor node to be included in the portion of the neural network. In one embodiment, a coefficient of each of the variables is defined based on a predefined value range (e.g., in a pseudo-random manner). In one embodiment, one of the linear equations in the set of linear equations is configured to equal a parameter representing a negative of a volume of an input one of the anchor nodes or a volume of an output one of the anchor nodes, and remaining linear equations in the set of linear equations are configured to equal zero.

In one embodiment, the set of linear equations are generated from a matrix of values. In one embodiment, the matrix is a diagonal matrix. In one embodiment, the matrix is generated based on defined constraints. In one embodiment, the defined constraints include a size of the matrix. In one embodiment, the matrix is an N x M matrix, with N and M defined. In one embodiment, the matrix is an N x M matrix, with N and M selected in a pseudo-random manner based on a defined size range for N and M. In one embodiment, a number of columns in the matrix is equivalent to a number of anchor nodes to be included in the portion of the neural network. In one embodiment, a number of rows in the matrix of values is the same as the number of columns in the matrix of values. In one embodiment, at least a portion of the values in the matrix define the connections between the anchor nodes.

In one embodiment, the defined constraints include a range for one or more of the values included in the matrix. In one embodiment, the defined constraints prohibit certain values from being included in the matrix, such as numbers with a non-terminating decimal. In one embodiment, the set of integer linear equations includes a linear equation determined for each row of the matrix. In on embodiment, each value in the row is a coefficient for a respective anchor node.

In operation **104,** at least a portion of the neural network is generated, using the set of linear equations, based, at least in part, on whether the at least a portion of the neural network is to produce a valid result, wherein the valid result includes a functional portion of the neural network. In one embodiment, the portion of the neural network includes the anchor nodes (e.g. nodes at a same particular level in the neural network) and connections between the anchor nodes.

In one embodiment, the portion of the neural network may be generated using the set of linear equations by determining the anchor nodes for the portion of the neural network and determining the connections between the anchor nodes. In one embodiment, determining the anchor nodes for the intermediate layer may include determining a number of anchor nodes for the portion of the neural network, a volume of each of the anchor nodes, and dimensions corresponding to the volume for each of the anchor nodes.

In one embodiment, the volume of each of the anchor nodes is determined by solving the set of integer linear equations. In one embodiment, the set of linear equations are solved by reducing the linear equations such that each reduced linear equation represents a volume of a respective anchor node as a function of a volume of one or more input ones of the anchor nodes (e.g. some coefficient value multiplied by the volume of the one or more input anchor nodes).

In one embodiment, solving the set of linear equations to determine the volume of each of the anchor nodes includes solving the set of linear equations, or the reduced linear equations, to determine integer scale factors for the anchor nodes (e.g., integer multipliers that convert a coefficient of the reduced linear equations to a lowest possible integer), determining a minimum valid input volume for the one or more input anchor nodes based on the integer scale factors (e.g., as the least common multiple of the integer multipliers), selecting a volume for each of the one or more input anchor nodes, based on the minimum valid volume determined for each of the one or more input anchor nodes, and further calculating a volume for each of the remaining anchor nodes, based on the selected volume for each of the one or more input anchor nodes and the reduced linear equations.

In one embodiment, the dimensions corresponding to the volume for each of the anchor nodes may represent a shape of the anchor node. In one embodiment, the dimensions may be a sequence of values, with a product equivalent to the volume of the anchor node. One or more of the anchor nodes may have a same number of dimensions, while other ones of the anchor nodes may have a different number of dimensions.

In one embodiment, the portion of the neural network may be generated using pseudo-random values selected within a defined range of value. In one embodiment, the pseudo-random values may be used to generate the matrix. In one embodiment, the pseudo-random values may be used to determine the anchor node dimensions.

In one embodiment, the portion of the neural network is further generated by determining a function for each of the connections between the anchor nodes, based on the dimensions of the anchor nodes linked by the connection. As noted above, a particular connection connects, or links, two anchor nodes, hereinafter referred to as a source anchor node from which the connection is directed towards a destination anchor node. Thus, the source anchor node provides input to the function, and the output of the function is provided to the destination anchor node. The function is accordingly applied to the dimensions of the source anchor node.

In one embodiment, the function includes one or more operations (e.g. that execute in sequence). The one or more operations transform the input to generate the output, where the output matches the dimensions of the destination anchor node. In other words, the one or more operations transform the dimensions of the source anchor node to the dimensions of the destination anchor node. The operations may include one or more operations to be tested using the neural network, one or more reshape operations that changes the number of dimensions of the input, one or more reduce operations that reduces dimension values (e.g. subtracts some amount from one or more of the dimension values), and/or one or more add operations that adds dimension values (e.g. adds some amount to one or more of the dimension values).

In one embodiment, the function is configured (e.g. the operations therein selected) for a connection based on the dimensions of the two anchor nodes linked by the connection. In other words, the function is configured such that, when applied to the dimensions of the source anchor node, the function produces the dimensions of the destination anchor node. Configuring the function based on the given dimensions of the two connected anchor nodes allows the method 100 to focus on exercising diverse dimensionality between the anchor nodes.

In one other embodiment, the dimensions of the two anchor nodes linked by the connection are determined based on the function. In other words, the function for a particular connection is configured, which may be a function to be tested by the neural network for example, and the dimensions of the two anchor nodes linked by the connection may be determined in the manner as noted above while also taking into consideration the function. Configuring the dimensions of the two connected anchor nodes based on the function allows the method 100 to focus on exercising direct transformations between two similar anchor nodes.

To this end, a portion of a neural network is generated, using the set of linear equations. In one embodiment, the portion of a neural network may be represented by a directed graph, as shown by example in the embodiments below. In one embodiment, a sub-portion of the neural network may further be generated according to the one or more embodiments described above. In one embodiment, the sub-portion may be represented by a directed sub-graph of the directed graph. Accordingly, multiple portions of the neural network, which may or may not be nested, may be generated through multiple iterations of the method **100.**

As noted above with respect to operation **104,** the portion of the neural network is generated, based, at least in part, on whether the portion of the neural network is to produce a valid result, wherein the valid result includes a functional portion of the neural network. In one embodiment, the portion of the neural network produces a valid result when a connection therein does not produce a zero value, a negative value, or an infinite value, or when the portion otherwise provides a functional (i.e. stable, executable, etc.) portion of the neural network. The valid result may be produced by correctly determining the anchor node volumes from the set of linear equations, and further configuring the function for each connection such that the function correctly transforms the dimensions of the source anchor node to the dimensions of the destination anchor.

In one embodiment, one or more parameters to be used in conjunction with one or more linear equations are received, and one or more portions of a neural network are generated based, at least in part, on whether the one or more parameters is to cause the one or more portions of the neural network to produce a valid result. The one or more parameters may be the coefficients for the one or more linear equations. In one embodiment, the one or more parameters may be received in a matrix. In one embodiment, the one or more portions of the neural network are generated using the one or more parameters. In one embodiment, the one or more portions of the neural network are generated using the one or more linear equations, where the one or more linear equations are generated from the one or more parameters.

More illustrative information will now be set forth regarding various optional architectures and features with which the foregoing framework may be implemented, per the desires of the user. It should be strongly noted that the following information is set forth for illustrative purposes and should not be construed as limiting in any manner. Any of the following features may be optionally incorporated with or without the exclusion of other features described.

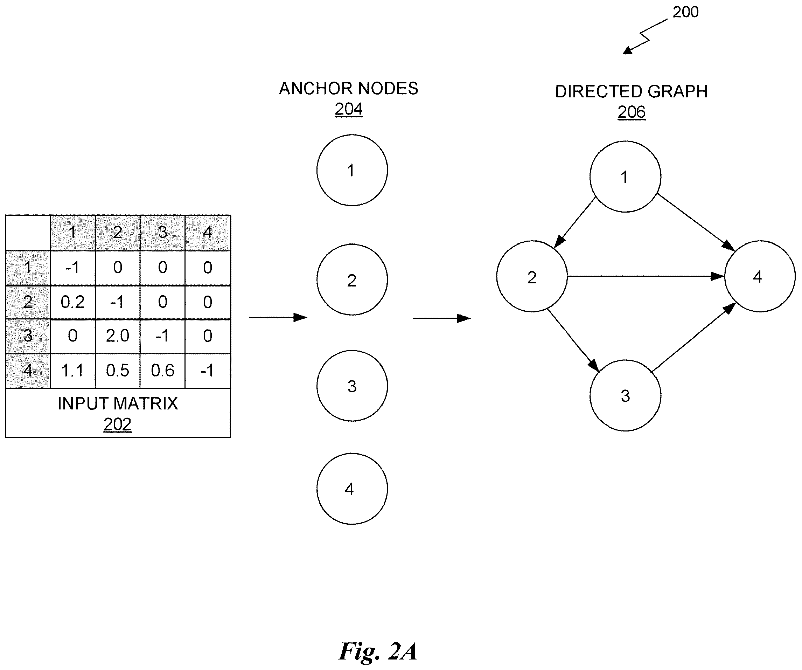

Figure **2A** illustrates a diagram of a directed graph representation of a portion of a neural network constructed from a matrix, in accordance with one embodiment. As an option, the definitions, descriptions, etc. provided with respect to Figure **1** above may equally apply to the present description.

As shown, an input matrix **202** is provided for generating the portion of the neural network. The input matrix **202** dimensions define the number of the anchor nodes **204** in the portion, which is 4 in the embodiment shown (represented as 1, 2, 3, and 4). The non-zero values in the bottom left triangle of the input matrix **202** define the connections between the anchor nodes **204.**

Thus, a directed graph **206,** as shown, can be generated using the input matrix **202,** namely based on the number of the anchor nodes **204** and the connections therebetween defined by the input matrix **202.** In the embodiment shown, the inputs to the directed graph **206** are the (-1) diagonal entries with all row values equal to zero (0), and the outputs to the directed graph **206** are the (-1) diagonal entries with all column values equal to zero (0).

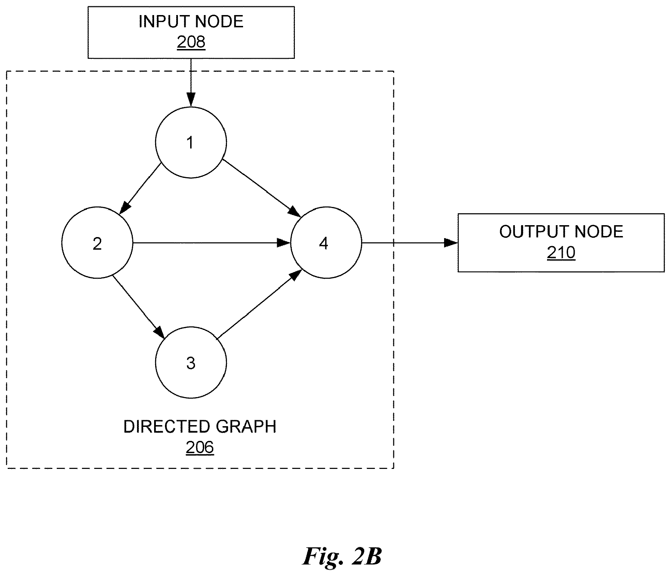

Figure **2B** illustrates the directed graph representation of Figure **2A** with input and output nodes connected to the portion of the neural network, in accordance with one embodiment.

As shown, the input node **208** represents input to the portion of the neural network represented by the directed graph **206,** and in the embodiment shown provides input to anchor node 1. The input node **208** may be an input tensor, in one embodiment. The input node **208** may include user data, in one embodiment. The input node **208** may represent a volume of anchor node 1, in one embodiment.

The output node **210** represents output from the portion of the neural network represented by the directed graph **206,** and in the embodiment shown receives output from anchor node 4. The output node **210** may be an output tensor, in one embodiment. The output node **210** may include user data, in one embodiment. The output node **210** may represent a volume of anchor node 4, in one embodiment.

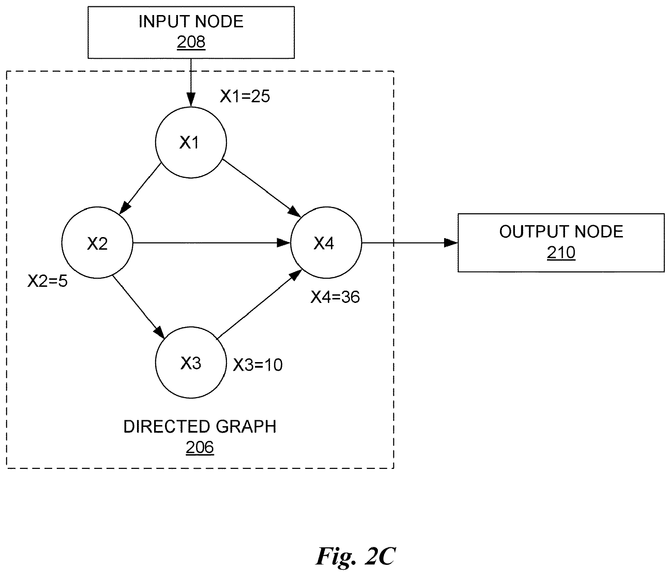

Using the input matrix **202,** a volume of each of the anchor nodes in the directed graph **206** is determined. Figure **2C** illustrates the directed graph representation of Figure **2B** with an indication of calculated node volumes, in accordance with one embodiment.

In one embodiment, the anchor node volumes may be calculated using an equation that is based on a position of the anchor node in the intermediate layer. Intermediate layer, as represented in directed graph **206,** has *input* nodes 1...*l, intermediate* nodes *l*+1...*m,* and output nodes *m*+1...*n.* Each node has an integer volume $x_i$ related as follows:

Intermediate volumes are functions of inputs and previous intermediates, using Equation 1:

$$x_i = \sum_{j=1}^{i-1} r_{ij} x_j$$

(Equation 1)

Output volumes are a function of inputs and all intermediates, using Equation 2:

$$x_i = \sum_{j=1}^{m} r_{ij} x_j$$

(Equation 2)

Integer solutions to these equations are determined in the case where the coefficients $r_{ij}$ are rational. This system is unit lower triangular, and remains so if the intermediates are eliminated to reduce to Equation 3:

$$x_i = \sum_{j=1}^{l} r'_{ij} x_j$$

(Equation 3)

The equations will have integral solutions if each $r'_{ij} x_j$ is an integer, which is guaranteed if each input $x_j$ is a multiple of the least common multiple of the divisors of its coefficients $r'_{ij}$.

In an exemplary implementation of Equations 1-3 above, the node volumes may be calculated in accordance with the following description relating to Tables 1-4, in one embodiment.

In one embodiment, using the input matrix **202,** the set of linear equations shown in Table 1 is generated. In particular, each linear equation is generated from a row in the input matrix **202,** where each column corresponds to an anchor node in the intermediate layer and where each column value in the row is the coefficient for the corresponding anchor node. The first linear equation in the set is configured to be equal to the (-inputSize), and the remaining linear equations in the set are configured to be equal to zero. X1, X2, X3, and X4 correspond to anchor nodes 1, 2, 3, 4 in directed graph **206,** respectively. The -inputSize represents the negative of a volume for an input anchor node of the anchor nodes, which in this case is X1 (with the inputSize for X1 to be selected).

Table 1

$$-1*X1 + 0*X2 + 0*X3 + 0*X4 = \text{-inputSize}$$
$$0.2*X1 + -1*X2 + 0*X3 + 0*X4 = 0$$
$$0*X1 + 2.0*X2 + -1*X3 + 0*X4 = 0$$
$$1.1*X1 + 0.5*X2 + 0.6*X3 + -1*X4 = 0$$

Next, the linear equations in the set are reduced, to represent a volume of a respective anchor node as a function of an input one of the anchor nodes (e.g. some coefficient value multiplied by the volume of the input anchor node). In this embodiment shown, the input anchor node is X1 (since X1 is an input node as shown in the directed graph **206**), such that a volume of anchor nodes X2, X3, and X4 are represented in the reduced linear equations as a function of a volume of X1. Table 2 illustrates the reduced linear equations.

Table 2

$$X2 = 0.2*X1$$
$$X3 = 0.4*X1$$
$$X4 = 1.1*X1 + 0.1*X1 + 0.24*X1 = 1.44*X1$$

From the reduced linear equations, integer scale factors are determined for the anchor nodes, where the integer scale factors transform the coefficients in Table 2 into integers. Table 3 illustrates the integer scale factors determined from the reduced linear equations from Table 2.

Table 3

| X2 | needs integer scale factor 5 to convert .2 to 1 |
|----|--------------------------------------------------|
| X3 | needs integer scale factor 5 to convert .4 to 2 |
| X4 | needs integer scale factor 25 to convert 1.44 to 36 |

The least common multiple of the integer scale factors is then determined to be the minimum valid volume for the input anchor node X1. "Valid" refers to the volume for X1, which when selected, will produce integers for the volumes of the remaining anchor nodes. Thus, the intermediate layer for neural network, in this embodiment, will function based on integer node values.

From the least common multiple, volumes for each of the anchor nodes are determined using the reduced linear equations. Table 4 illustrates the volumes selected for the anchor nodes, based on the minimum valid input volume determined for X1.

Table 4

Let X1=25, then
X2 = 5,
X3=10, and
X4=36

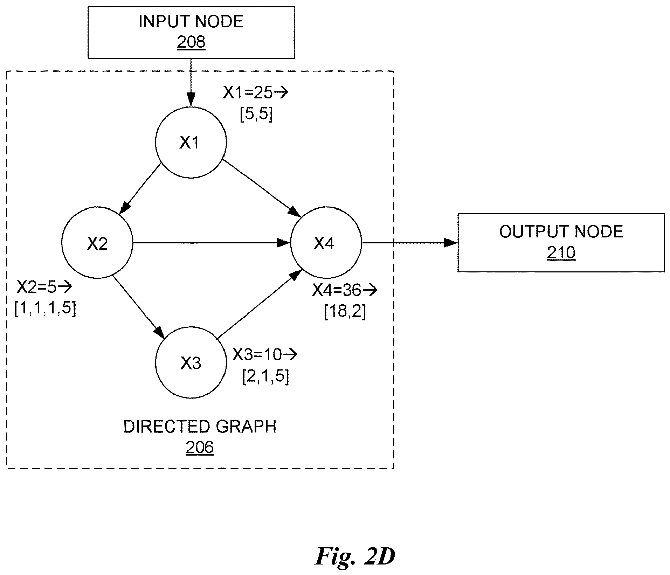

Based on the anchor node volumes calculated for each of the anchor nodes, dimensions for each of the anchor nodes is determined. Figure **2D** illustrates the directed graph representation of Figure **2C** with an indication of determined node dimensions, in accordance with one embodiment.

In one embodiment, the dimensions for an anchor node correspond directly to the volume of the anchor node and may represent a shape of the anchor node. The number of dimensions and the dimension values for each anchor node may be determined, or selected, using a computer program. In one embodiment, the number of dimensions and/or the dimension values may be constrained within a predetermined range.

After the anchor node volumes and dimensions are determined, a function for each connection in the intermediate layer is determined. The function may be determined, or selected, using a computer program that combines one or more of the operations as described above.

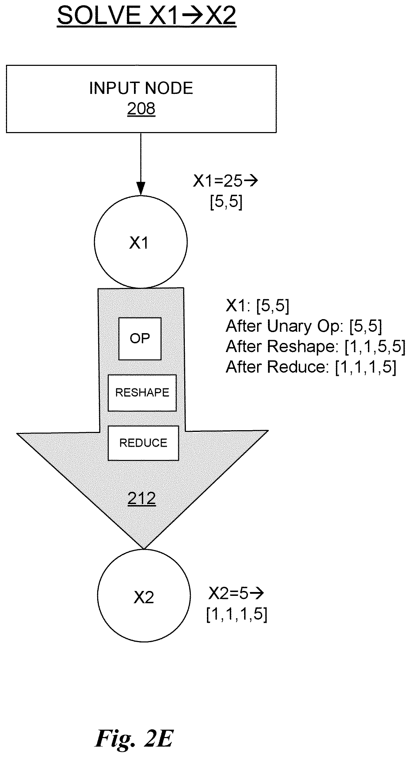

Figure 2E illustrates a function for the connection between node X1 and node X2 in the directed graph representation of Figure 2D, in accordance with one embodiment.

As shown, the connection 212 between X1 and X2 includes a function comprised of a plurality of operations that transform the dimensions of X1 to the dimensions of X2. In the embodiment shown, the function includes a unary operation (e.g. that may be used as a test operation, in one embodiment). The unary operation, as shown, does not change the dimensions input from X1. Thus, the output from the unary operation is the same as the dimensions of X1: [5,5].

Following the unary operation is a reshape operation that changes the number of dimensions of the output from the unary operation. The reshape operation, as shown, changes the number of dimensions by adding two new dimensions, in order to match the number of dimensions of X2. As shown, the output from the reshape operation is [1,1,5,5]. The dimension values for the new dimensions may be selected to match the corresponding dimension values of X2.

Following the reshape operation is a reduce operation that reduces dimension values of the output of the reshape operation. The reduce operation, as shown, reduces the third dimension from " 5" to "1", in order to match the third dimension of X2. Thus, the output of the reduce operation, and thus the output of the function for the connection 212, matches the dimensions of X2.

The operations may include one or more operations to be tested using the neural network, one or more reshape operations that changes the number of dimensions of the input, one or more reduce operations that reduces dimension values (e.g. subtracts some amount from one or more of the dimension values), and/or one or more add operations that adds dimension values to (e.g. adds some amount to one or more of the dimension values).

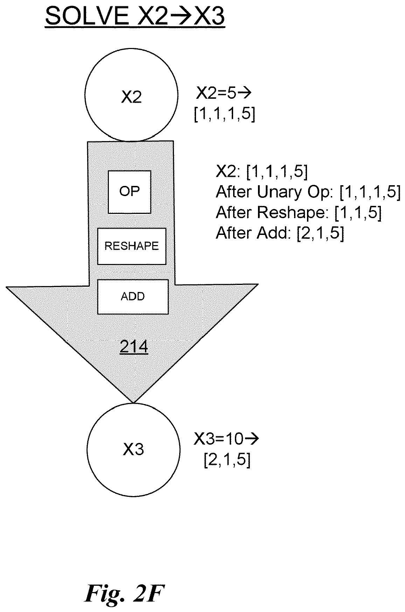

Figure 2F illustrates a function for the connection between node X2 and node X3 in the directed graph representation of Figure 2D, in accordance with one embodiment.

As shown, the connection 214 between X2 and X3 includes a function comprised of a plurality of operations that transform the dimensions of X2 to the dimensions of X3. In the embodiment shown, the function includes a unary operation (e.g. that may be used as a test operation, in one embodiment). The unary operation, as shown, does not change the dimensions input from X2. Thus, the output from the unary operation is the same as the dimensions of X2: [1,1,1,5].

Following the unary operation is a reshape operation that changes the number of dimensions of the output from the unary operation. The reshape operation, as shown, changes the number of dimensions by removing the first dimension, in order to match the number of dimensions of X3. As shown, the output from the reshape operation is [1,1,5].

Following the reshape operation is an add operation that adds dimension values to the output of the reshape operation. The add operation, as shown, adds to the first dimension to change the first dimension from "1" to "2", in order to match the first dimension of X3. Thus, the output of the add operation, and thus the output of the function for the connection 214, matches the dimensions of X3.

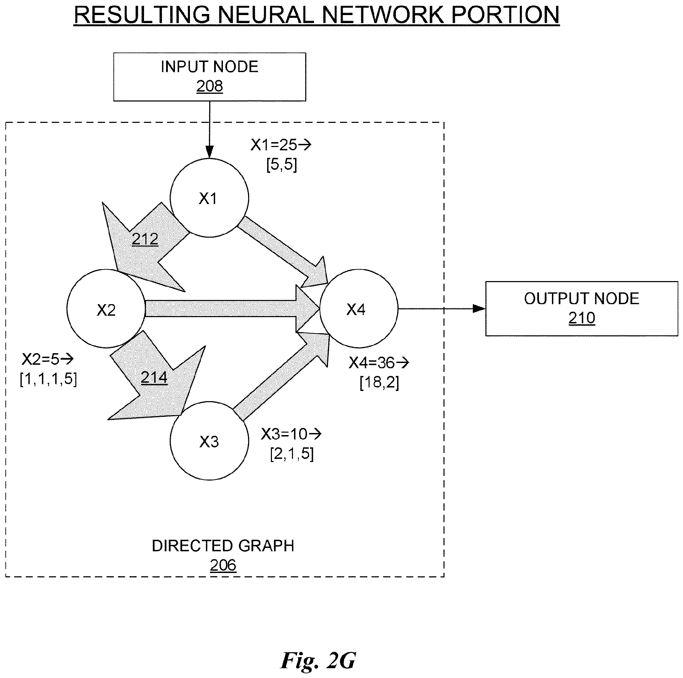

Figure 2G illustrates an exemplary neural network portion resulting, in part, from the function in Figure 2E and the function in Figure 2F, in accordance with one embodiment. While not described herein, it should be noted that functions for the remaining connections may be determined in a manner similar to that described above for Figures 2E and 2F.

As an option, a sub-portion of the neural network may be generated for the portion represented by the directed graph 206 of Figure 2G. The sub-portion is generated between connected anchor nodes of the already generated portion, and may be generated using the flow described above with respect to Figures 2A-2G. In particular, the sub-portion may be generated using a corresponding input matrix 216 determined for the sub-portion. Further, the sub-portion may be connected between connected anchor nodes by selecting functions to connect the portion to the sub-portion.

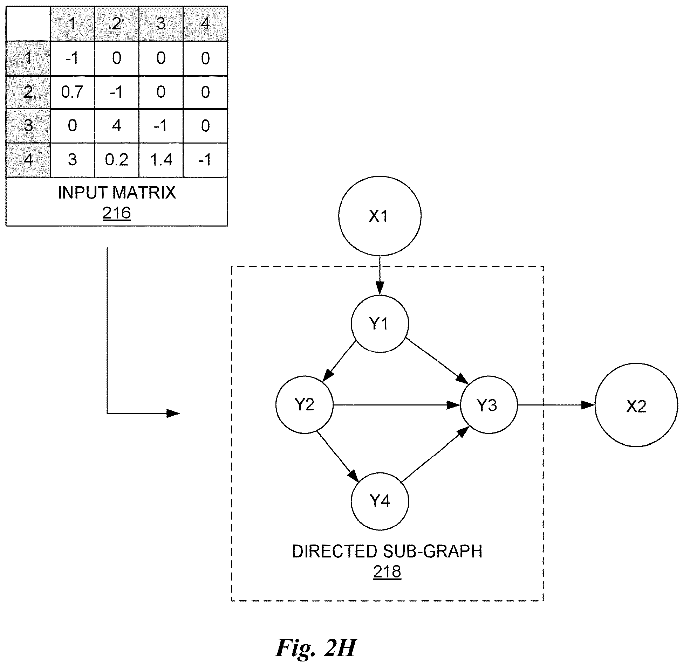

Figure 2H illustrates a directed graph representation of a sub-portion of the intermediate layer of the neural network of Figure 2G constructed from a matrix, in accordance with one embodiment.

In the embodiment shown, an input matrix 216 is determined for a sub-portion that is to be generated between X1 and X2. Based on the input matrix 216, a directed graph 218 is determined. The directed graph 218 includes the anchor nodes for the sub-portion (Y1, Y2, Y3, Y4) as well as the connections between those anchor nodes.

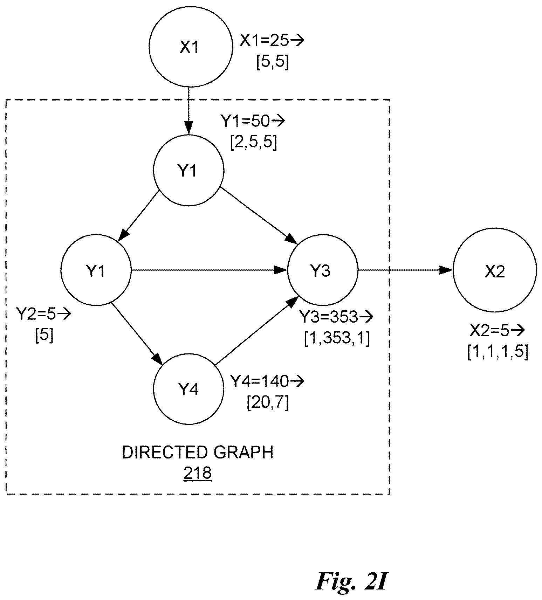

In the manner described above with respect to Figures 2C-2D, anchor node volumes and dimensions are determined for the anchor nodes in the directed graph 218. Figure 2I illustrates the directed graph representation of Figure 2H with an indication of calculated node volumes and determined node dimensions, in accordance with one embodiment. Further, while not shown, functions are determined for each connection in the sub-portion, as described above with respect to Figures 2E-2F, as well as functions to connect the sub-portion to X1 and X2. To this end, the flow illustrated through Figures **2A-2G** may be repeated for different portions of the neural network, which may or may not be nested layers.

**Parallel Processing Architecture**

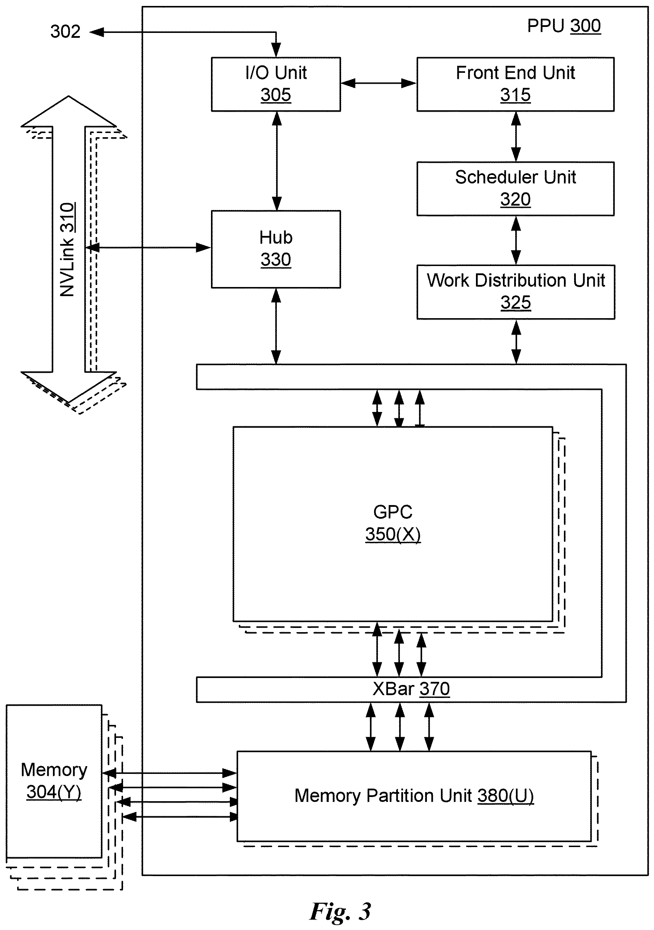

Figure **3** illustrates a parallel processing unit (PPU) **300,** in accordance with an embodiment. In an embodiment, the PPU **300** is a multi-threaded processor that is implemented on one or more integrated circuit devices. The PPU **300** is a latency hiding architecture designed to process many threads in parallel. A thread (e.g., a thread of execution) is an instantiation of a set of instructions configured to be executed by the PPU **300**. In an embodiment, the PPU **300** is a graphics processing unit (GPU) configured to implement a graphics rendering pipeline for processing three-dimensional (3D) graphics data in order to generate two-dimensional (2D) image data for display on a display device such as a liquid crystal display (LCD) device. In other embodiments, the PPU **300** may be utilized for performing general-purpose computations. While one exemplary parallel processor is provided herein for illustrative purposes, it should be strongly noted that such processor is set forth for illustrative purposes only, and that any processor may be employed to supplement and/or substitute for the same.

One or more PPUs **300** may be configured to accelerate thousands of High Performance Computing (HPC), data center, and machine learning applications. The PPU **300** may be configured to accelerate numerous deep learning systems and applications including autonomous vehicle platforms, deep learning, high-accuracy speech, image, and text recognition systems, intelligent video analytics, molecular simulations, drug discovery, disease diagnosis, weather forecasting, big data analytics, astronomy, molecular dynamics simulation, financial modeling, robotics, factory automation, real-time language translation, online search optimizations, and personalized user recommendations, and the like.

As shown in Figure **3,** the PPU **300** includes an Input/Output (I/O) unit **305,** a front end unit **315,** a scheduler unit **320,** a work distribution unit **325,** a hub **330,** a crossbar (Xbar) **370,** one or more general processing clusters (GPCs) **350,** and one or more memory partition units **380.** The PPU **300** may be connected to a host processor or other PPUs **300** via one or more high-speed NVLink **310** interconnect. The PPU **300** may be connected to a host processor or other peripheral devices via an interconnect **302.** The PPU **300** may also be connected to a local memory comprising a number of memory devices **304.** In an embodiment, the local memory may comprise a number of dynamic random access memory (DRAM) devices. The DRAM devices may be configured as a high-bandwidth memory (HBM) subsystem, with multiple DRAM dies stacked within each device.

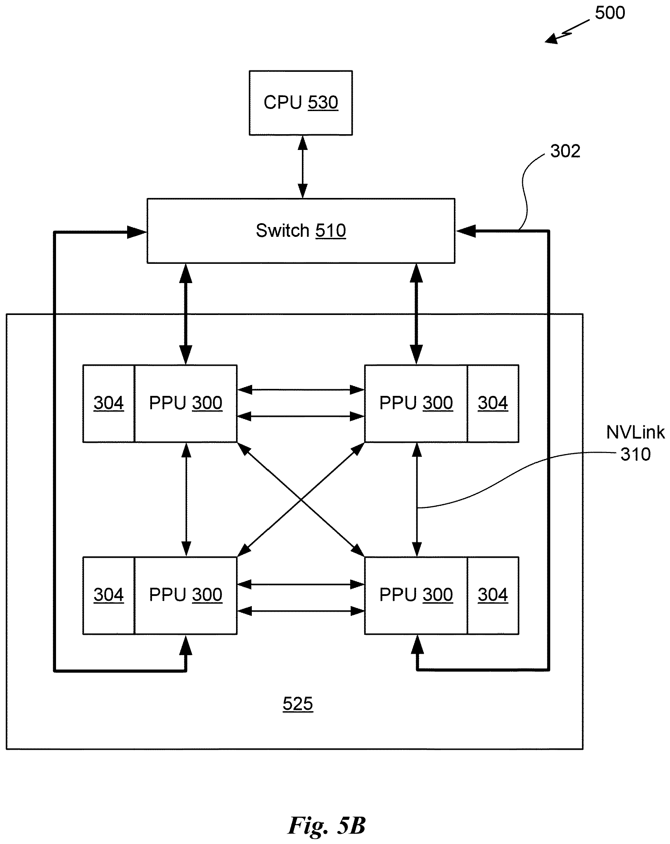

The NVLink **310** interconnect enables systems to scale and include one or more PPUs 300 combined with one or more CPUs, supports cache coherence between the PPUs **300** and CPUs, and CPU mastering. Data and/or commands may be transmitted by the NVLink **310** through the hub **330** to/from other units of the PPU **300** such as one or more copy engines, a video encoder, a video decoder, a power management unit, etc. (not explicitly shown). The NVLink **310** is described in more detail in conjunction with Figure **5B.**

The I/O unit **305** is configured to transmit and receive communications (e.g., commands, data, etc.) from a host processor (not shown) over the interconnect **302.** The I/O unit **305** may communicate with the host processor directly via the interconnect **302** or through one or more intermediate devices such as a memory bridge. In an embodiment, the I/O unit **305** may communicate with one or more other processors, such as one or more the PPUs **300** via the interconnect **302.** In an embodiment, the I/O unit **305** implements a Peripheral Component Interconnect Express (PCIe) interface for communications over a PCIe bus and the interconnect **302** is a PCIe bus. In alternative embodiments, the I/O unit **305** may implement other types of well-known interfaces for communicating with external devices.

The I/O unit **305** decodes packets received via the interconnect **302.** In an embodiment, the packets represent commands configured to cause the PPU **300** to perform various operations. The I/O unit **305** transmits the decoded commands to various other units of the PPU **300** as the commands may specify. For example, some commands may be transmitted to the front end unit **315.** Other commands may be transmitted to the hub **330** or other units of the PPU **300** such as one or more copy engines, a video encoder, a video decoder, a power management unit, etc. (not explicitly shown). In other words, the I/O unit **305** is configured to route communications between and among the various logical units of the PPU **300.**

In an embodiment, a program executed by the host processor encodes a command stream in a buffer that provides workloads to the PPU **300** for processing. A workload may comprise several instructions and data to be processed by those instructions. The buffer is a region in a memory that is accessible (e.g., read/write) by both the host processor and the PPU **300.** For example, the I/O unit **305** may be configured to access the buffer in a system memory connected to the interconnect **302** via memory requests transmitted over the interconnect **302.** In an embodiment, the host processor writes the command stream to the buffer and then transmits a pointer to the start of the command stream to the PPU **300.** The front end unit **315** receives pointers to one or more command streams. The front end unit **315** manages the one or more streams, reading commands from the streams and forwarding commands to the various units of the PPU **300.**

The front end unit **315** is coupled to a scheduler unit **320** that configures the various GPCs **350** to process tasks defined by the one or more streams. The scheduler unit **320** is configured to track state information related to the various tasks managed by the scheduler unit 320. The state may indicate which GPC **350** a task is assigned to, whether the task is active or inactive, a priority level associated with the task, and so forth. The scheduler unit **320** manages the execution of a plurality of tasks on the one or more GPCs **350.**

The scheduler unit **320** is coupled to a work distribution unit **325** that is configured to dispatch tasks for execution on the GPCs **350.** The work distribution unit **325** may track a number of scheduled tasks received from the scheduler unit **320.** In an embodiment, the work distribution unit **325** manages a pending task pool and an active task pool for each of the GPCs **350.** The pending task pool may comprise a number of slots (e.g., 32 slots) that contain tasks assigned to be processed by a particular GPC **350.** The active task pool may comprise a number of slots (e.g., 4 slots) for tasks that are actively being processed by the GPCs **350.** As a GPC **350** finishes the execution of a task, that task is evicted from the active task pool for the GPC **350** and one of the other tasks from the pending task pool is selected and scheduled for execution on the GPC **350.** If an active task has been idle on the GPC **350,** such as while waiting for a data dependency to be resolved, then the active task may be evicted from the GPC **350** and returned to the pending task pool while another task in the pending task pool is selected and scheduled for execution on the GPC **350.**

The work distribution unit **325** communicates with the one or more GPCs **350** via XBar **370.** The XBar **370** is an interconnect network that couples many of the units of the PPU **300** to other units of the PPU **300.** For example, the XBar **370** may be configured to couple the work distribution unit **325** to a particular GPC **350.** Although not shown explicitly, one or more other units of the PPU **300** may also be connected to the XBar **370** via the hub **330.**

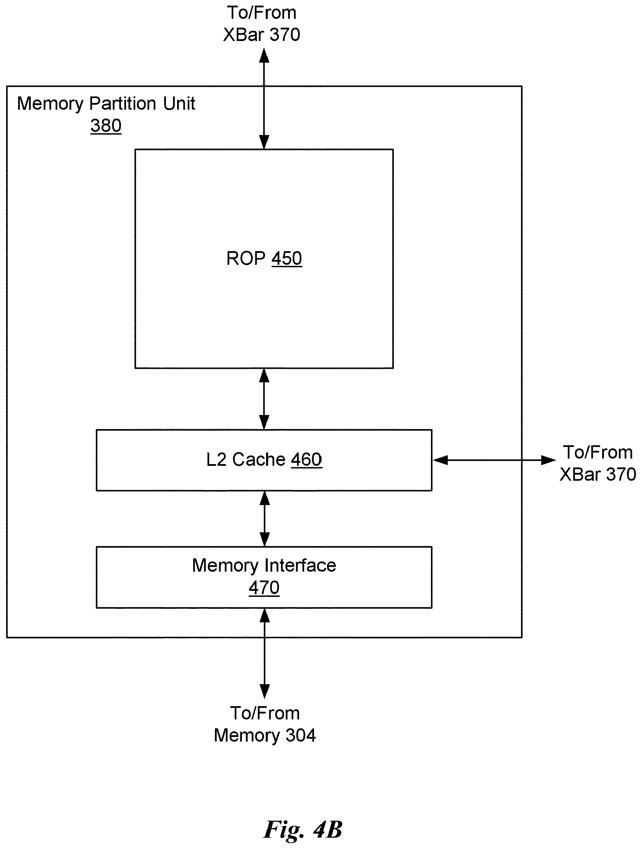

The tasks are managed by the scheduler unit **320** and dispatched to a GPC **350** by the work distribution unit **325.** The GPC **350** is configured to process the task and generate results. The results may be consumed by other tasks within the GPC **350,** routed to a different GPC **350** via the XBar **370,** or stored in the memory **304.** The results can be written to the memory **304** via the memory partition units **380,** which implement a memory interface for reading and writing data to/from the memory **304.** The results can be transmitted to another PPU **304** or CPU via the NVLink **310.** In an embodiment, the PPU **300** includes a number *U* of memory partition units **380** that is equal to the number of separate and distinct memory devices **304** coupled to the PPU **300.** A memory partition unit **380** will be described in more detail below in conjunction with Figure **4B.**

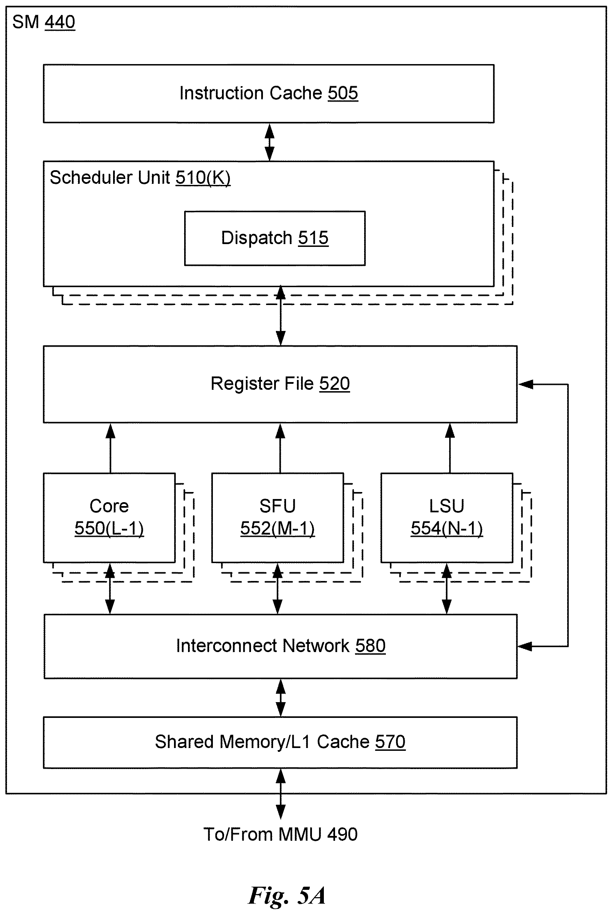

In an embodiment, a host processor executes a driver kernel that implements an application programming interface (API) that enables one or more applications executing on the host processor to schedule operations for execution on the PPU **300.** In an embodiment, multiple compute applications are simultaneously executed by the PPU **300** and the PPU **300** provides isolation, quality of service (QoS), and independent address spaces for the multiple compute applications. An application may generate instructions (e.g., API calls) that cause the driver kernel to generate one or more tasks for execution by the PPU **300.** The driver kernel outputs tasks to one or more streams being processed by the PPU **300.** Each task may comprise one or more groups of related threads, referred to herein as a warp. In an embodiment, a warp comprises 32 related threads that may be executed in parallel. Cooperating threads may refer to a plurality of threads including instructions to perform the task and that may exchange data through shared memory. Threads and cooperating threads are described in more detail in conjunction with Figure **5A.**

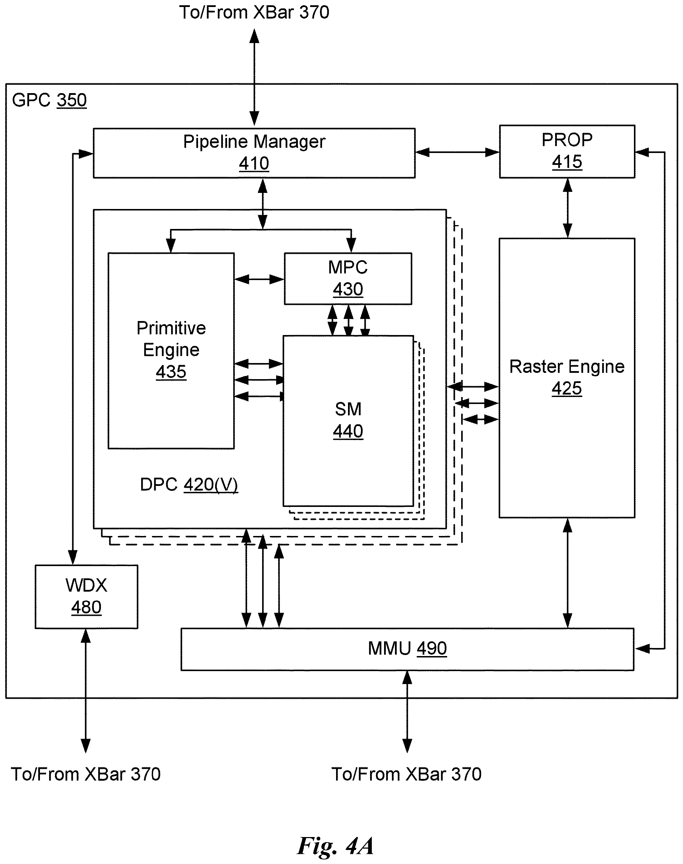

Figure **4A** illustrates a GPC **350** of the PPU **300** of Figure **3,** in accordance with an embodiment. As shown in Figure **4A,** each GPC **350** includes a number of hardware units for processing tasks. In an embodiment, each GPC **350** includes a pipeline manager **410,** a preraster operations unit (PROP) **415,** a raster engine **425,** a work distribution crossbar (WDX) **480,** a memory management unit (MMU) **490,** and one or more Data Processing Clusters (DPCs) **420.** It will be appreciated that the GPC **350** of Figure **4A** may include other hardware units in lieu of or in addition to the units shown in Figure **4A.**

In an embodiment, the operation of the GPC **350** is controlled by the pipeline manager **410.** The pipeline manager **410** manages the configuration of the one or more DPCs **420** for processing tasks allocated to the GPC **350.** In an embodiment, the pipeline manager **410** may configure at least one of the one or more DPCs **420** to implement at least a portion of a graphics rendering pipeline. For example, a DPC **420** may be configured to execute a vertex shader program on the programmable streaming multiprocessor (SM) **440.** The pipeline manager **410** may also be configured to route packets received from the work distribution unit **325** to the appropriate logical units within the GPC **350.** For example, some packets may be routed to fixed function hardware units in the PROP **415** and/or raster engine **425** while other packets may be routed to the DPCs **420** for processing by the primitive engine **435** or the SM **440.** In an embodiment, the pipeline manager **410** may configure at least one of the one or more DPCs **420** to implement a neural network model and/or a computing pipeline.

The PROP unit **415** is configured to route data generated by the raster engine **425** and the DPCs **420** to a Raster Operations (ROP) unit, described in more detail in conjunction with Figure **4B.** The PROP unit **415** may also be configured to perform optimizations for color blending, organize pixel data, perform address translations, and the like.

The raster engine **425** includes a number of fixed function hardware units configured to perform various raster operations. In an embodiment, the raster engine **425** includes a setup engine, a coarse raster engine, a culling engine, a clipping engine, a fine raster engine, and a tile coalescing engine. The setup engine receives transformed vertices and generates plane equations associated with the geometric primitive defined by the vertices. The plane equations are transmitted to the coarse raster engine to generate coverage information (e.g., an x,y coverage mask for a tile) for the primitive. The output of the coarse raster engine is transmitted to the culling engine where fragments associated with the primitive that fail a z-test are culled, and transmitted to a clipping engine where fragments lying outside a viewing frustum are clipped. Those fragments that survive clipping and culling may be passed to the fine raster engine to generate attributes for the pixel fragments based on the plane equations generated by the setup engine. The output of the raster engine **425** comprises fragments to be processed, for example, by a fragment shader implemented within a DPC **420.**

Each DPC **420** included in the GPC **350** includes an M-Pipe Controller (MPC) **430,** a primitive engine **435,** and one or more SMs **440.** The MPC **430** controls the operation of the DPC **420,** routing packets received from the pipeline manager **410** to the appropriate units in the DPC **420.** For example, packets associated with a vertex may be routed to the primitive engine **435,** which is configured to fetch vertex attributes associated with the vertex from the memory 304. In contrast, packets associated with a shader program may be transmitted to the SM **440.**

The SM **440** comprises a programmable streaming processor that is configured to process tasks represented by a number of threads. Each SM **440** is multi-threaded and configured to execute a plurality of threads (e.g., 32 threads) from a particular group of threads concurrently. In an embodiment, the SM **440** implements a SIMD (Single-Instruction, Multiple-Data) architecture where each thread in a group of threads (e.g., a warp) is configured to process a different set of data based on the same set of instructions. All threads in the group of threads execute the same instructions. In another embodiment, the SM **440** implements a SIMT (Single-Instruction, Multiple Thread) architecture where each thread in a group of threads is configured to process a different set of data based on the same set of instructions, but where individual threads in the group of threads are allowed to diverge during execution. In an embodiment, a program counter, call stack, and execution state is maintained for each warp, enabling concurrency between warps and serial execution within warps when threads within the warp diverge. In another embodiment, a program counter, call stack, and execution state is maintained for each individual thread, enabling equal concurrency between all threads, within and between warps. When execution state is maintained for each individual thread, threads executing the same instructions may be converged and executed in parallel for maximum efficiency. The SM **440** will be described in more detail below in conjunction with Figure **5A.**

The MMU **490** provides an interface between the GPC **350** and the memory partition unit **380.** The MMU **490** may provide translation of virtual addresses into physical addresses, memory protection, and arbitration of memory requests. In an embodiment, the MMU **490** provides one or more translation lookaside buffers (TLBs) for performing translation of virtual addresses into physical addresses in the memory **304.**

Figure **4B** illustrates a memory partition unit **380** of the PPU **300** of Figure **3,** in accordance with an embodiment. As shown in Figure **4B,** the memory partition unit **380** includes a Raster Operations (ROP) unit **450,** a level two (L2) cache **460,** and a memory interface **470.** The memory interface **470** is coupled to the memory **304.** Memory interface **470** may implement 32, 64, 128, 1024-bit data buses, or the like, for high-speed data transfer. In an embodiment, the PPU **300** incorporates U memory interfaces **470,** one memory interface **470** per pair of memory partition units **380,** where each pair of memory partition units **380** is connected to a corresponding memory device **304.** For example, PPU **300** may be connected to up to Y memory devices **304,** such as high bandwidth memory stacks or graphics double-data-rate, version 5, synchronous dynamic random access memory, or other types of persistent storage.

In an embodiment, the memory interface **470** implements an HBM2 memory interface and Y equals half U. In an embodiment, the HBM2 memory stacks are located on the same physical package as the PPU **300,** providing substantial power and area savings compared with conventional GDDR5 SDRAM systems. In an embodiment, each HBM2 stack includes four memory dies and Y equals 4, with HBM2 stack including two 128-bit channels per die for a total of 8 channels and a data bus width of 1024 bits.

In an embodiment, the memory **304** supports Single-Error Correcting Double-Error Detecting (SECDED) Error Correction Code (ECC) to protect data. ECC provides higher reliability for compute applications that are sensitive to data corruption. Reliability is especially important in large-scale cluster computing environments where PPUs **300** process very large datasets and/or run applications for extended periods.

In an embodiment, the PPU **300** implements a multi-level memory hierarchy. In an embodiment, the memory partition unit **380** supports a unified memory to provide a single unified virtual address space for CPU and PPU **300** memory, enabling data sharing between virtual memory systems. In an embodiment the frequency of accesses by a PPU **300** to memory located on other processors is traced to ensure that memory pages are moved to the physical memory of the PPU **300** that is accessing the pages more frequently. In an embodiment, the NVLink **310** supports address translation services allowing the PPU **300** to directly access a CPU's page tables and providing full access to CPU memory by the PPU **300.**

In an embodiment, copy engines transfer data between multiple PPUs **300** or between PPUs **300** and CPUs. The copy engines can generate page faults for addresses that are not mapped into the page tables. The memory partition unit **380** can then service the page faults, mapping the addresses into the page table, after which the copy engine can perform the transfer. In a conventional system, memory is pinned (e.g., non-pageable) for multiple copy engine operations between multiple processors, substantially reducing the available memory. With hardware page faulting, addresses can be passed to the copy engines without worrying if the memory pages are resident, and the copy process is transparent.

Data from the memory **304** or other system memory may be fetched by the memory partition unit **380** and stored in the L2 cache **460,** which is located on-chip and is shared between the various GPCs **350.** As shown, each memory partition unit **380** includes a portion of the L2 cache **460** associated with a corresponding memory device **304.** Lower level caches may then be implemented in various units within the GPCs **350.** For example, each of the SMs **440** may implement a level one (LI) cache. The L1 cache is private memory that is dedicated to a particular SM **440.** Data from the L2 cache **460** may be fetched and stored in each of the L1 caches for processing in the functional units of the SMs **440.** The L2 cache **460** is coupled to the memory interface **470** and the XBar **370.**

The ROP unit **450** performs graphics raster operations related to pixel color, such as color compression, pixel blending, and the like. The ROP unit **450** also implements depth testing in conjunction with the raster engine **425,** receiving a depth for a sample location associated with a pixel fragment from the culling engine of the raster engine **425.** The depth is tested against a corresponding depth in a depth buffer for a sample location associated with the fragment. If the fragment passes the depth test for the sample location, then the ROP unit **450** updates the depth buffer and transmits a result of the depth test to the raster engine **425.** It will be appreciated that the number of memory partition units **380** may be different than the number of GPCs **350** and, therefore, each ROP unit **450** may be coupled to each of the GPCs **350.** The ROP unit **450** tracks packets received from the different GPCs **350** and determines which GPC **350** that a result generated by the ROP unit **450** is routed to through the Xbar **370.** Although the ROP unit **450** is included within the memory partition unit **380** in Figure **4B,** in other embodiment, the ROP unit **450** may be outside of the memory partition unit **380.** For example, the ROP unit **450** may reside in the GPC **350** or another unit.

Figure **5A** illustrates the streaming multi-processor **440** of Figure **4A,** in accordance with an embodiment. As shown in Figure **5A,** the SM **440** includes an instruction cache **505,** one or more scheduler units **510,** a register file **520,** one or more processing cores **550,** one or more special function units (SFUs) **552,** one or more load/store units (LSUs) **554,** an interconnect network **580,** a shared memory/L1 cache **570.**

As described above, the work distribution unit **325** dispatches tasks for execution on the GPCs **350** of the PPU **300.** The tasks are allocated to a particular DPC **420** within a GPC **350** and, if the task is associated with a shader program, the task may be allocated to an SM **440.** The scheduler unit **510** receives the tasks from the work distribution unit **325** and manages instruction scheduling for one or more thread blocks assigned to the SM **440.** The scheduler unit **510** schedules thread blocks for execution as warps of parallel threads, where each thread block is allocated at least one warp. In an embodiment, each warp executes 32 threads. The scheduler unit **510** may manage a plurality of different thread blocks, allocating the warps to the different thread blocks and then dispatching instructions from the plurality of different cooperative groups to the various functional units (e.g., cores **550,** SFUs **552,** and LSUs **554**) during each clock cycle.

Cooperative Groups is a programming model for organizing groups of communicating threads that allows developers to express the granularity at which threads are communicating, enabling the expression of richer, more efficient parallel decompositions. Cooperative launch APIs support synchronization amongst thread blocks for the execution of parallel algorithms. Conventional programming models provide a single, simple construct for synchronizing cooperating threads: a barrier across all threads of a thread block (e.g., the syncthreads() function). However, programmers would often like to define groups of threads at smaller than thread block granularities and synchronize within the defined groups to enable greater performance, design flexibility, and software reuse in the form of collective group-wide function interfaces.

Cooperative Groups enables programmers to define groups of threads explicitly at sub-block (e.g., as small as a single thread) and multi-block granularities, and to perform collective operations such as synchronization on the threads in a cooperative group. The programming model supports clean composition across software boundaries, so that libraries and utility functions can synchronize safely within their local context without having to make assumptions about convergence. Cooperative Groups primitives enable new patterns of cooperative parallelism, including producer-consumer parallelism, opportunistic parallelism, and global synchronization across an entire grid of thread blocks.

A dispatch unit **515** is configured to transmit instructions to one or more of the functional units. In the embodiment, the scheduler unit **510** includes two dispatch units **515** that enable two different instructions from the same warp to be dispatched during each clock cycle. In alternative embodiments, each scheduler unit **510** may include a single dispatch unit **515** or additional dispatch units **515.**

Each SM **440** includes a register file **520** that provides a set of registers for the functional units of the SM **440.** In an embodiment, the register file **520** is divided between each of the functional units such that each functional unit is allocated a dedicated portion of the register file **520.** In another embodiment, the register file **520** is divided between the different warps being executed by the SM **440.** The register file **520** provides temporary storage for operands connected to the data paths of the functional units.

Each SM **440** comprises $L$ processing cores **550.** In an embodiment, the SM **440** includes a large number (e.g., 128, etc.) of distinct processing cores **550.** Each core **550** may include a fully-pipelined, single-precision, double-precision, and/or mixed precision processing unit that includes a floating point arithmetic logic unit and an integer arithmetic logic unit. In an embodiment, the floating point arithmetic logic units implement the IEEE 754-2008 standard for floating point arithmetic. In an embodiment, the cores **550** include 64 single-precision (32-bit) floating point cores, 64 integer cores, 32 double-precision (64-bit) floating point cores, and 8 tensor cores.

Tensor cores configured to perform matrix operations, and, in an embodiment, one or more tensor cores are included in the cores **550**. In particular, the tensor cores are configured to perform deep learning matrix arithmetic, such as convolution operations for neural network training and inferencing. In an embodiment, each tensor core operates on a 4x4 matrix and performs a matrix multiply and accumulate operation $D=A\times B+C$, where A, B, C, and D are 4x4 matrices.

In an embodiment, the matrix multiply inputs A and B are 16-bit floating point matrices, while the accumulation matrices C and D may be 16-bit floating point or 32-bit floating point matrices. Tensor Cores operate on 16-bit floating point input data with 32-bit floating point accumulation. The 16-bit floating point multiply requires 64 operations and results in a full precision product that is then accumulated using 32-bit floating point addition with the other intermediate products for a 4x4x4 matrix multiply. In practice, Tensor Cores are used to perform much larger two-dimensional or higher dimensional matrix operations, built up from these smaller elements. An API, such as CUDA 9 C++ API, exposes specialized matrix load, matrix multiply and accumulate, and matrix store operations to efficiently use Tensor Cores from a CUDA-C++ program. At the CUDA level, the warp-level interface assumes 16x16 size matrices spanning all 32 threads of the warp.

Each SM **440** also comprises $M$ SFUs **552** that perform special functions (e.g., attribute evaluation, reciprocal square root, and the like). In an embodiment, the SFUs **552** may include a tree traversal unit configured to traverse a hierarchical tree data structure. In an embodiment, the SFUs **552** may include texture unit configured to perform texture map filtering operations. In an embodiment, the texture units are configured to load texture maps (e.g., a 2D array of texels) from the memory **304** and sample the texture maps to produce sampled texture values for use in shader programs executed by the SM **440**. In an embodiment, the texture maps are stored in the shared memory/L1 cache **470**. The texture units implement texture operations such as filtering operations using mip-maps (e.g., texture maps of varying levels of detail). In an embodiment, each SM **340** includes two texture units.

Each SM **440** also comprises $N$ LSUs **554** that implement load and store operations between the shared memory/L1 cache **570** and the register file **520**. Each SM **440** includes an interconnect network **580** that connects each of the functional units to the register file **520** and the LSU **554** to the register file **520,** shared memory/ L1 cache **570**. In an embodiment, the interconnect network **580** is a crossbar that can be configured to connect any of the functional units to any of the registers in the register file **520** and connect the LSUs **554** to the register file and memory locations in shared memory/L1 cache **570**.

The shared memory/L1 cache **570** is an array of on-chip memory that allows for data storage and communication between the SM **440** and the primitive engine **435** and between threads in the SM **440**. In an embodiment, the shared memory/L1 cache **570** comprises 128KB of storage capacity and is in the path from the SM **440** to the memory partition unit **380**. The shared memory/L1 cache **570** can be used to cache reads and writes. One or more of the shared memory/L1 cache **570**, L2 cache **460,** and memory **304** are backing stores.

Combining data cache and shared memory functionality into a single memory block provides the best overall performance for both types of memory accesses. The capacity is usable as a cache by programs that do not use shared memory. For example, if shared memory is configured to use half of the capacity, texture and load/store operations can use the remaining capacity. Integration within the shared memory/L1 cache **570** enables the shared memory/L1 cache **570** to function as a high-throughput conduit for streaming data while simultaneously providing high-bandwidth and low-latency access to frequently reused data.

When configured for general purpose parallel computation, a simpler configuration can be used compared with graphics processing. Specifically, the fixed function graphics processing units shown in Figure **3,** are bypassed, creating a much simpler programming model. In the general purpose parallel computation configuration, the work distribution unit **325** assigns and distributes blocks of threads directly to the DPCs **420**. The threads in a block execute the same program, using a unique thread ID in the calculation to ensure each thread generates unique results, using the SM **440** to execute the program and perform calculations, shared memory/L1 cache **570** to communicate between threads, and the LSU **554** to read and write global memory through the shared memory/L1 cache **570** and the memory partition unit **380**. When configured for general purpose parallel computation, the SM **440** can also write commands that the scheduler unit **320** can use to launch new work on the DPCs **420**.

The PPU **300** may be included in a desktop computer, a laptop computer, a tablet computer, servers, supercomputers, a smart-phone (e.g., a wireless, hand-held device), personal digital assistant (PDA), a digital camera, a vehicle, a head mounted display, a hand-held electronic device, and the like. In an embodiment, the PPU **300** is embodied on a single semiconductor substrate. In another embodiment, the PPU **300** is included in a system-on-a-chip (SoC) along with one or more other devices such as additional PPUs **300,** the memory **304,** a reduced instruction set computer (RISC) CPU, a memory management unit (MMU), a digital-to-analog converter (DAC), and the like.

In an embodiment, the PPU **300** may be included on a graphics card that includes one or more memory devices **304.** The graphics card may be configured to interface with a PCIe slot on a motherboard of a desktop computer. In yet another embodiment, the PPU **300** may be an integrated graphics processing unit (iGPU) or parallel processor included in the chipset of the motherboard.

**Exemplary Computing System**

Systems with multiple GPUs and CPUs are used in a variety of industries as developers expose and leverage more parallelism in applications such as artificial intelligence computing. High-performance GPU-accelerated systems with tens to many thousands of compute nodes are deployed in data centers, research facilities, and supercomputers to solve ever larger problems. As the number of processing devices within the high-performance systems increases, the communication and data transfer mechanisms need to scale to support the increased bandwidth.

Figure **5B** is a conceptual diagram of a processing system **500** implemented using the PPU **300** of Figure **3,** in accordance with an embodiment. The exemplary system **565** may be configured to implement the method **100** shown in Figure **1.** The processing system **500** includes a CPU **530,** switch **510,** and multiple PPUs **300** each and respective memories **304.** The NVLink **310** provides high-speed communication links between each of the PPUs **300.** Although a particular number of NVLink **310** and interconnect **302** connections are illustrated in Figure **5B,** the number of connections to each PPU **300** and the CPU **530** may vary. The switch **510** interfaces between the interconnect **302** and the CPU **530.** The PPUs **300,** memories **304,** and NVLinks **310** may be situated on a single semiconductor platform to form a parallel processing module **525.** In an embodiment, the switch **510** supports two or more protocols to interface between various different connections and/or links.

In another embodiment (not shown), the NVLink **310** provides one or more high-speed communication links between each of the PPUs **300** and the CPU **530** and the switch **510** interfaces between the interconnect **302** and each of the PPUs **300.** The PPUs **300,** memories **304,** and interconnect **302** may be situated on a single semiconductor platform to form a parallel processing module **525.** In yet another embodiment (not shown), the interconnect **302** provides one or more communication links between each of the PPUs **300** and the CPU **530** and the switch **510** interfaces between each of the PPUs **300** using the NVLink **310** to provide one or more high-speed communication links between the PPUs **300.** In another embodiment (not shown), the NVLink 310 provides one or more high-speed communication links between the PPUs 300 and the CPU 530 through the switch 510. In yet another embodiment (not shown), the interconnect 302 provides one or more communication links between each of the PPUs 300 directly. One or more of the NVLink **310** high-speed communication links may be implemented as a physical NVLink interconnect or either an on-chip or on-die interconnect using the same protocol as the NVLink **310.**

In the context of the present description, a single semiconductor platform may refer to a sole unitary semiconductor-based integrated circuit fabricated on a die or chip. It should be noted that the term single semiconductor platform may also refer to multi-chip modules with increased connectivity which simulate on-chip operation and make substantial improvements over utilizing a conventional bus implementation. Of course, the various circuits or devices may also be situated separately or in various combinations of semiconductor platforms per the desires of the user. Alternately, the parallel processing module **525** may be implemented as a circuit board substrate and each of the PPUs **300** and/or memories **304** may be packaged devices. In an embodiment, the CPU **530,** switch **510,** and the parallel processing module **525** are situated on a single semiconductor platform.

In an embodiment, the signaling rate of each NVLink **310** is 20 to 25 Gigabits/second and each PPU **300** includes six NVLink **310** interfaces (as shown in Figure **5B,** five NVLink **310** interfaces are included for each PPU **300**). Each NVLink **310** provides a data transfer rate of 25 Gigabytes/second in each direction, with six links providing 300 Gigabytes/second. The NVLinks **310** can be used exclusively for PPU-to-PPU communication as shown in Figure **5B,** or some combination of PPU-to-PPU and PPU-to-CPU, when the CPU **530** also includes one or more NVLink **310** interfaces.

In an embodiment, the NVLink **310** allows direct load/store/atomic access from the CPU **530** to each PPU's **300** memory **304.** In an embodiment, the NVLink **310** supports coherency operations, allowing data read from the memories **304** to be stored in the cache hierarchy of the CPU **530,** reducing cache access latency for the CPU **530.** In an embodiment, the NVLink **310** includes support for Address Translation Services (ATS), allowing the PPU **300** to directly access page tables within the CPU **530.** One or more of the NVLinks **310** may also be configured to operate in a low-power mode.

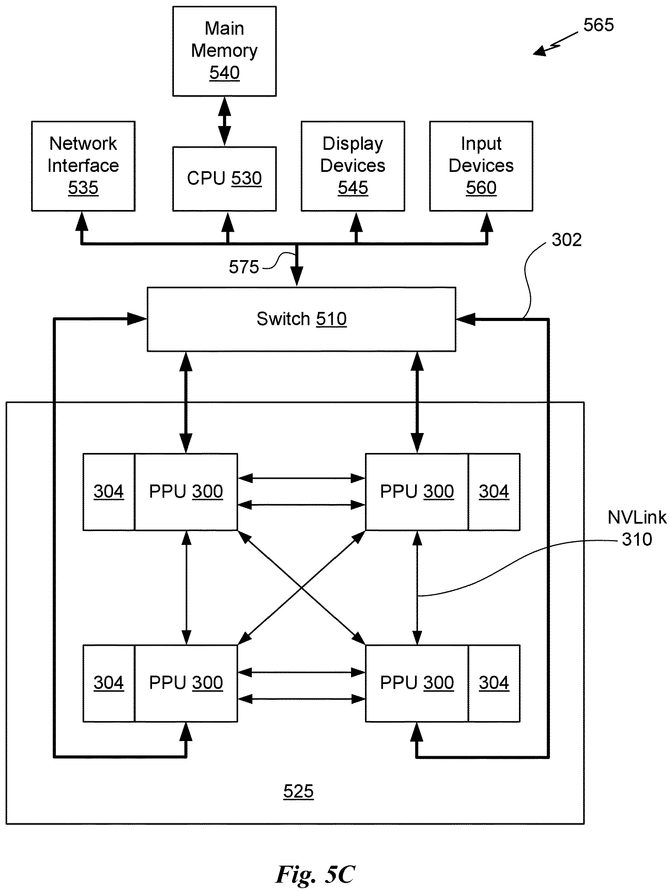

Figure **5C** illustrates an exemplary system **565** in which the various architecture and/or functionality of the various previous embodiments may be implemented. The exemplary system **565** may be configured to implement the method **100** shown in Figure **1.**

As shown, a system **565** is provided including at least one central processing unit **530** that is connected to a communication bus **575.** The communication bus **575** may be implemented using any suitable protocol, such as PCI (Peripheral Component Interconnect), PCI-Express, AGP (Accelerated Graphics Port), HyperTransport, or any other bus or point-to-point communication protocol(s). The system **565** also includes a main memory **540.** Control logic (software) and data are stored in the main memory **540** which may take the form of random access memory (RAM).

The system **565** also includes input devices **560,** the parallel processing system **525,** and display devices **545,** e.g. a conventional CRT (cathode ray tube), LCD (liquid crystal display), LED (light emitting diode), plasma display or the like. User input may be received from the input devices **560,** e.g., keyboard, mouse, touchpad, microphone, and the like. Each of the foregoing modules and/or devices may even be situated on a single semiconductor platform to form the system **565.** Alternately, the various modules may also be situated separately or in various combinations of semiconductor platforms per the desires of the user.

Further, the system **565** may be coupled to a network (e.g., a telecommunications network, local area network (LAN), wireless network, wide area network (WAN) such as the Internet, peer-to-peer network, cable network, or the like) through a network interface **535** for communication purposes.

The system **565** may also include a secondary storage (not shown). The secondary storage **610** includes, for example, a hard disk drive and/or a removable storage drive, representing a floppy disk drive, a magnetic tape drive, a compact disk drive, digital versatile disk (DVD) drive, recording device, universal serial bus (USB) flash memory. The removable storage drive reads from and/or writes to a removable storage unit in a well-known manner.

Computer programs, or computer control logic algorithms, may be stored in the main memory **540** and/or the secondary storage. Such computer programs, when executed, enable the system **565** to perform various functions. The memory **540,** the storage, and/or any other storage are possible examples of computer-readable media.

The architecture and/or functionality of the various previous figures may be implemented in the context of a general computer system, a circuit board system, a game console system dedicated for entertainment purposes, an application-specific system, and/or any other desired system. For example, the system **565** may take the form of a desktop computer, a laptop computer, a tablet computer, servers, supercomputers, a smart-phone (e.g., a wireless, hand-held device), personal digital assistant (PDA), a digital camera, a vehicle, a head mounted display, a hand-held electronic device, a mobile phone device, a television, workstation, game consoles, embedded system, and/or any other type of logic.

While various embodiments have been described above, it should be understood that they have been presented by way of example only, and not limitation. Thus, the breadth and scope of a preferred embodiment should not be limited by any of the above-described exemplary embodiments, but should be defined only in accordance with the following claims and their equivalents.

**Graphics Processing Pipeline**

In an embodiment, the PPU **300** comprises a graphics processing unit (GPU). The PPU **300** is configured to receive commands that specify shader programs for processing graphics data. Graphics data may be defined as a set of primitives such as points, lines, triangles, quads, triangle strips, and the like. Typically, a primitive includes data that specifies a number of vertices for the primitive (e.g., in a model-space coordinate system) as well as attributes associated with each vertex of the primitive. The PPU **300** can be configured to process the graphics primitives to generate a frame buffer (e.g., pixel data for each of the pixels of the display).

An application writes model data for a scene (e.g., a collection of vertices and attributes) to a memory such as a system memory or memory **304.** The model data defines each of the objects that may be visible on a display. The application then makes an API call to the driver kernel that requests the model data to be rendered and displayed. The driver kernel reads the model data and writes commands to the one or more streams to perform operations to process the model data. The commands may reference different shader programs to be implemented on the SMs **440** of the PPU **300** including one or more of a vertex shader, hull shader, domain shader, geometry shader, and a pixel shader. For example, one or more of the SMs **440** may be configured to execute a vertex shader program that processes a number of vertices defined by the model data. In an embodiment, the different SMs **440** may be configured to execute different shader programs concurrently. For example, a first subset of SMs **440** may be configured to execute a vertex shader program while a second subset of SMs **440** may be configured to execute a pixel shader program. The first subset of SMs **440** processes vertex data to produce processed vertex data and writes the processed vertex data to the L2 cache **460** and/or the memory **304.** After the processed vertex data is rasterized (e.g., transformed from three-dimensional data into two-dimensional data in screen space) to produce fragment data, the second subset of SMs **440** executes a pixel shader to produce processed fragment data, which is then blended with other processed fragment data and written to the frame buffer in memory **304.** The vertex shader program and pixel shader program may execute concurrently, processing different data from the same scene in a pipelined fashion until all of the model data for the scene has been rendered to the frame buffer. Then, the contents of the frame buffer are transmitted to a display controller for display on a display device.

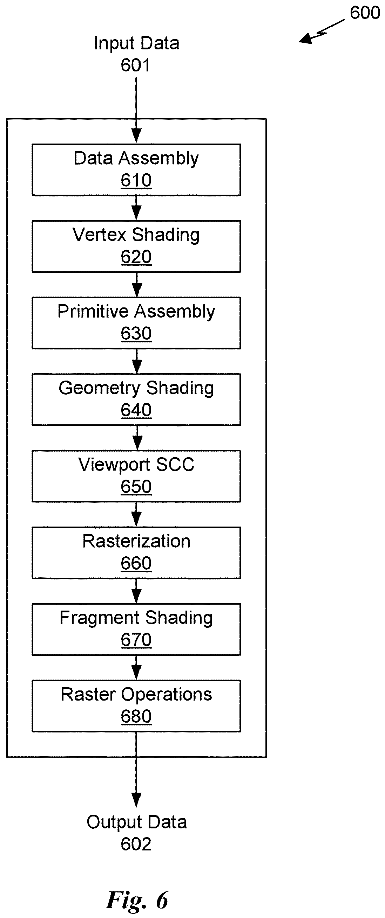

Figure **6** is a conceptual diagram of a graphics processing pipeline **600** implemented by the PPU **300** of Figure **3,** in accordance with an embodiment. The graphics processing pipeline **600** is an abstract flow diagram of the processing steps implemented to generate 2D computer-generated images from 3D geometry data. As is well-known, pipeline architectures may perform long latency operations more efficiently by splitting up the operation into a plurality of stages, where the output of each stage is coupled to the input of the next successive stage. Thus, the graphics processing pipeline **600** receives input data **601** that is transmitted from one stage to the next stage of the graphics processing pipeline **600** to generate output data **602**. In an embodiment, the graphics processing pipeline **600** may represent a graphics processing pipeline defined by the OpenGL® API. As an option, the graphics processing pipeline **600** may be implemented in the context of the functionality and architecture of the previous Figures and/or any subsequent Figure(s).

As shown in Figure **6**, the graphics processing pipeline **600** comprises a pipeline architecture that includes a number of stages. The stages include, but are not limited to, a data assembly stage **610**, a vertex shading stage **620**, a primitive assembly stage **630**, a geometry shading stage **640**, a viewport scale, cull, and clip (VSCC) stage **650**, a rasterization stage **660**, a fragment shading stage **670**, and a raster operations stage **680**. In an embodiment, the input data **601** comprises commands that configure the processing units to implement the stages of the graphics processing pipeline **600** and geometric primitives (e.g., points, lines, triangles, quads, triangle strips or fans, etc.) to be processed by the stages. The output data **602** may comprise pixel data (e.g., color data) that is copied into a frame buffer or other type of surface data structure in a memory.

The data assembly stage **610** receives the input data **601** that specifies vertex data for high-order surfaces, primitives, or the like. The data assembly stage **610** collects the vertex data in a temporary storage or queue, such as by receiving a command from the host processor that includes a pointer to a buffer in memory and reading the vertex data from the buffer. The vertex data is then transmitted to the vertex shading stage **620** for processing.

The vertex shading stage **620** processes vertex data by performing a set of operations (e.g., a vertex shader or a program) once for each of the vertices. Vertices may be, e.g., specified as a 4-coordinate vector (e.g., <x, y, z, w>) associated with one or more vertex attributes (e.g., color, texture coordinates, surface normal, etc.). The vertex shading stage **620** may manipulate individual vertex attributes such as position, color, texture coordinates, and the like. In other words, the vertex shading stage **620** performs operations on the vertex coordinates or other vertex attributes associated with a vertex. Such operations commonly including lighting operations (e.g., modifying color attributes for a vertex) and transformation operations (e.g., modifying the coordinate space for a vertex). For example, vertices may be specified using coordinates in an object-coordinate space, which are transformed by multiplying the coordinates by a matrix that translates the coordinates from the object-coordinate space into a world space or a normalized-device-coordinate (NCD) space. The vertex shading stage **620** generates transformed vertex data that is transmitted to the primitive assembly stage **630**.

The primitive assembly stage **630** collects vertices output by the vertex shading stage **620** and groups the vertices into geometric primitives for processing by the geometry shading stage **640**. For example, the primitive assembly stage **630** may be configured to group every three consecutive vertices as a geometric primitive (e.g., a triangle) for transmission to the geometry shading stage **640**. In some embodiments, specific vertices may be reused for consecutive geometric primitives (e.g., two consecutive triangles in a triangle strip may share two vertices). The primitive assembly stage **630** transmits geometric primitives (e.g., a collection of associated vertices) to the geometry shading stage **640**.

The geometry shading stage **640** processes geometric primitives by performing a set of operations (e.g., a geometry shader or program) on the geometric primitives. Tessellation operations may generate one or more geometric primitives from each geometric primitive. In other words, the geometry shading stage **640** may subdivide each geometric primitive into a finer mesh of two or more geometric primitives for processing by the rest of the graphics processing pipeline **600**. The geometry shading stage **640** transmits geometric primitives to the viewport SCC stage **650**.

In an embodiment, the graphics processing pipeline **600** may operate within a streaming multiprocessor and the vertex shading stage **620**, the primitive assembly stage **630**, the geometry shading stage **640**, the fragment shading stage **670**, and/or hardware/software associated therewith, may sequentially perform processing operations. Once the sequential processing operations are complete, in an embodiment, the viewport SCC stage **650** may utilize the data. In an embodiment, primitive data processed by one or more of the stages in the graphics processing pipeline **600** may be written to a cache (e.g. L1 cache, a vertex cache, etc.). In this case, in an embodiment, the viewport SCC stage **650** may access the data in the cache. In an embodiment, the viewport SCC stage **650** and the rasterization stage **660** are implemented as fixed function circuitry.

The viewport SCC stage **650** performs viewport scaling, culling, and clipping of the geometric primitives. Each surface being rendered to is associated with an abstract camera position. The camera position represents a location of a viewer looking at the scene and defines a viewing frustum that encloses the objects of the scene. The viewing frustum may include a viewing plane, a rear plane, and four clipping planes. Any geometric primitive entirely outside of the viewing frustum may be culled (e.g., discarded) because the geometric primitive will not contribute to the final rendered scene. Any geometric primitive that is partially inside the viewing frustum and partially outside the viewing frustum may be clipped (e.g., transformed into a new geometric primitive that is enclosed within the viewing frustum. Furthermore, geometric primitives may each be scaled based on a depth of the viewing frustum. All potentially visible geometric primitives are then transmitted to the rasterization stage **660**.

The rasterization stage **660** converts the 3D geometric primitives into 2D fragments (e.g. capable of being utilized for display, etc.). The rasterization stage **660** may be configured to utilize the vertices of the geometric primitives to setup a set of plane equations from which various attributes can be interpolated. The rasterization stage **660** may also compute a coverage mask for a plurality of pixels that indicates whether one or more sample locations for the pixel intercept the geometric primitive. In an embodiment, z-testing may also be performed to determine if the geometric primitive is occluded by other geometric primitives that have already been rasterized. The rasterization stage **660** generates fragment data (e.g., interpolated vertex attributes associated with a particular sample location for each covered pixel) that are transmitted to the fragment shading stage **670**.

The fragment shading stage **670** processes fragment data by performing a set of operations (e.g., a fragment shader or a program) on each of the fragments. The fragment shading stage **670** may generate pixel data (e.g., color values) for the fragment such as by performing lighting operations or sampling texture maps using interpolated texture coordinates for the fragment. The fragment shading stage **670** generates pixel data that is transmitted to the raster operations stage **680**.

The raster operations stage **680** may perform various operations on the pixel data such as performing alpha tests, stencil tests, and blending the pixel data with other pixel data corresponding to other fragments associated with the pixel. When the raster operations stage **680** has finished processing the pixel data (e.g., the output data **602**), the pixel data may be written to a render target such as a frame buffer, a color buffer, or the like.

It will be appreciated that one or more additional stages may be included in the graphics processing pipeline **600** in addition to or in lieu of one or more of the stages described above. Various implementations of the abstract graphics processing pipeline may implement different stages. Furthermore, one or more of the stages described above may be excluded from the graphics processing pipeline in some embodiments (such as the geometry shading stage **640**). Other types of graphics processing pipelines are contemplated as being within the scope of the present disclosure. Furthermore, any of the stages of the graphics processing pipeline **600** may be implemented by one or more dedicated hardware units within a graphics processor such as PPU **300**. Other stages of the graphics processing pipeline **600** may be implemented by programmable hardware units such as the SM **440** of the PPU **300**.

The graphics processing pipeline **600** may be implemented via an application executed by a host processor, such as a CPU. In an embodiment, a device driver may implement an application programming interface (API) that defines various functions that can be utilized by an application in order to generate graphical data for display. The device driver is a software program that includes a plurality of instructions that control the operation of the PPU **300**. The API provides an abstraction for a programmer that lets a programmer utilize specialized graphics hardware, such as the PPU **300,** to generate the graphical data without requiring the programmer to utilize the specific instruction set for the PPU **300**. The application may include an API call that is routed to the device driver for the PPU **300**. The device driver interprets the API call and performs various operations to respond to the API call. In some instances, the device driver may perform operations by executing instructions on the CPU. In other instances, the device driver may perform operations, at least in part, by launching operations on the PPU **300** utilizing an input/output interface between the CPU and the PPU **300**. In an embodiment, the device driver is configured to implement the graphics processing pipeline **600** utilizing the hardware of the PPU **300**.

Various programs may be executed within the PPU **300** in order to implement the various stages of the graphics processing pipeline **600**. For example, the device driver may launch a kernel on the PPU **300** to perform the vertex shading stage **620** on one SM **440** (or multiple SMs **440**). The device driver (or the initial kernel executed by the PPU **400**) may also launch other kernels on the PPU **400** to perform other stages of the graphics processing pipeline **600,** such as the geometry shading stage **640** and the fragment shading stage **670**. In addition, some of the stages of the graphics processing pipeline **600** may be implemented on fixed unit hardware such as a rasterizer or a data assembler implemented within the PPU **400**. It will be appreciated that results from one kernel may be processed by one or more intervening fixed function hardware units before being processed by a subsequent kernel on an SM **440.**

**Machine Learning**

Deep neural networks (DNNs) developed on processors, such as the PPU **300** have been used for diverse use cases, from self-driving cars to faster drug development, from automatic image captioning in online image databases to smart real-time language translation in video chat applications. Deep learning is a technique that models the neural learning process of the human brain, continually learning, continually getting smarter, and delivering more accurate results more quickly over time. A child is initially taught by an adult to correctly identify and classify various shapes, eventually being able to identify shapes without any coaching. Similarly, a deep learning or neural learning system needs to be trained in object recognition and classification for it get smarter and more efficient at identifying basic objects, occluded objects, etc., while also assigning context to objects.

At the simplest level, neurons in the human brain look at various inputs that are received, importance levels are assigned to each of these inputs, and output is passed on to other neurons to act upon. An artificial neuron or perceptron is the most basic model of a neural network. In one example, a perceptron may receive one or more inputs that represent various features of an object that the perceptron is being trained to recognize and classify, and each of these features is assigned a certain weight based on the importance of that feature in defining the shape of an object.

A deep neural network (DNN) model includes multiple layers of many connected nodes (e.g., perceptrons, Boltzmann machines, radial basis functions, convolutional layers, etc.) that can be trained with enormous amounts of input data to quickly solve complex problems with high accuracy. In one example, a first layer of the DNN model breaks down an input image of an automobile into various sections and looks for basic patterns such as lines and angles. The second layer assembles the lines to look for higher level patterns such as wheels, windshields, and mirrors. The next layer identifies the type of vehicle, and the final few layers generate a label for the input image, identifying the model of a specific automobile brand.

Once the DNN is trained, the DNN can be deployed and used to identify and classify objects or patterns in a process known as inference. Examples of inference (the process through which a DNN extracts useful information from a given input) include identifying handwritten numbers on checks deposited into ATM machines, identifying images of friends in photos, delivering movie recommendations to over fifty million users, identifying and classifying different types of automobiles, pedestrians, and road hazards in driverless cars, or translating human speech in real-time.

During training, data flows through the DNN in a forward propagation phase until a prediction is produced that indicates a label corresponding to the input. If the neural network does not correctly label the input, then errors between the correct label and the predicted label are analyzed, and the weights are adjusted for each feature during a backward propagation phase until the DNN correctly labels the input and other inputs in a training dataset. Training complex neural networks requires massive amounts of parallel computing performance, including floating-point multiplications and additions that are supported by the PPU **300**. Inferencing is less compute-intensive than training, being a latency-sensitive process where a trained neural network is applied to new inputs it has not seen before to classify images, translate speech, and generally infer new information.

Neural networks rely heavily on matrix math operations, and complex multi-layered networks require tremendous amounts of floating-point performance and bandwidth for both efficiency and speed. With thousands of processing cores, optimized for matrix math operations, and delivering tens to hundreds of TFLOPS of performance, the PPU **300** is a computing platform capable of delivering performance required for deep neural network-based artificial intelligence and machine learning applications.

## Claims

1. A system, comprising:
   at least one processor to:

   receive one or more parameters to be used in conjunction with one or more linear equations; and
   generate one or more portions of a neural network based, at least in part, on whether the one or more parameters is to cause the one or more portions of the neural network to produce a valid result.

2. The system of claim 1, wherein the one or more linear equations is generated from a matrix of values that includes the one or more parameters.

3. The system of claim 2, wherein the matrix is generated based on defined constraints for:

   a size of the matrix, and
   a range for one or more of the values.

4. The system of claim 2 or 3, wherein the matrix defines a number of anchor nodes for the one or more portions of the neural network and connections between the anchor nodes.

5. The system of any of the preceding claims, wherein the one or more portions of the neural network is generated, using the one or more linear equations, by:

   determining a volume of each anchor node of a plurality of anchor nodes in the one or more portions of the neural network, and
   determining dimensions for each of the anchor nodes, based on the volume of the anchor node.

6. The system of claim 5, wherein the volume of each anchor node of the plurality of anchor nodes is determined by:

reducing the one or more linear equations such that each linear equation represents a volume of a respective anchor node as a function of a volume of one or more input anchor nodes of the anchor nodes,
determining, from the reduced one or more linear equations, integer scale factors for the anchor nodes,
determining a minimum valid volume for the one or more input anchor nodes, using the integer scale factors,
selecting a volume for each of the one or more input anchor nodes, based on the minimum valid volume determined for each of the one or more input anchor nodes, and
calculating a volume for each of the remaining anchor nodes, based on the selected volume for each of the one or more input anchor nodes and the reduced one or more linear equations.

7. The system of claim 5 or 6, wherein the dimensions include a sequence of values with a product equivalent to the volume of the anchor node.

8. The system of any of claims 5 to 7, wherein the one or more portions of the neural network is further generated by: determining a function for each connection of a plurality of connections between the anchor nodes, based on the dimensions of the anchor nodes linked by the connection.

9. The system of claim 8, wherein the function for a respective one of the connections that links first and second ones of the anchor nodes includes one or more operations that transform the dimensions of the first anchor node to the dimensions of the second anchor node.

10. A non-transitory computer readable medium storing computer code executable by at least one processor to perform a method to:

receive as input a matrix of values including one or more parameters;
generate one or more linear equations from the matrix of values; and
generate one or more portions of a neural network, using the one or more linear equations, based, at least in part, on whether the one or more parameters is to cause the one or more portions of the neural network to produce a valid result.

11. The non-transitory computer readable medium of claim 10, wherein the matrix is generated based on defined constraints for:

a size of the matrix, and
a range for one or more of the values.

12. The non-transitory computer readable medium of claim 10 or 11, wherein the matrix defines a number of anchor nodes for the one or more portions of the neural network and connections between the anchor nodes.

13. The non-transitory computer readable medium of any of claims 10 to 12, wherein the one or more portions of the neural network is generated, using the one or more linear equations, by:

determining a volume of each anchor node of a plurality of anchor nodes in the one or more portions of the neural network, and
determining dimensions for each of the anchor nodes, based on the volume of the anchor node.

14. The non-transitory computer readable medium of claim 13, wherein the volume of each anchor node of the plurality of anchor nodes is determined by:

reducing the one or more linear equations such that each linear equation represents a volume of a respective anchor node as a function of a volume of one or more input anchor nodes of the anchor nodes,
determining, from the reduced one or more linear equations, integer scale factors for the anchor nodes,
determining a minimum valid volume for the one or more input anchor nodes, using the integer scale factors,
selecting a volume for each of the one or more input anchor nodes, based on the minimum valid volume determined for each of the one or more input anchor nodes, and
calculating a volume for each of the remaining anchor nodes, based on the selected volume for each of the one or more input anchor nodes and the reduced linear equations.

15. The non-transitory computer readable medium of claim 13 or 14, wherein the dimensions include a sequence of values with a product equivalent to the volume of the anchor node.

16. The non-transitory computer readable medium of any of claims 13 to 15, wherein the one or more portions of the neural network is further generated by:
determining a function for each connection of a plurality of connections between the anchor nodes, based on the dimensions of the anchor nodes linked by the connection.

17. The non-transitory computer readable medium of claim 16, wherein the function for a respective one of the connections that links first and second ones of the anchor nodes includes one or more operations that transform the dimensions of the first anchor node to the dimensions of the second anchor node.

18. A method to:

receive as input a matrix of values that defines a number of anchor nodes for one or more portions of a neural network and connections between the anchor nodes;
generate one or more linear equations from the matrix of values; and
generate the one or more portions of the neural network, using the one or more linear equations, based, at least in part, on whether the one or more portions of the neural network is to produce a valid result, wherein the one or more portions of the neural network is generated by:

determining a volume of each of the anchor nodes in the one or more portions of the neural network, using the one or more linear equations,
determining dimensions for each of the anchor nodes, wherein the dimensions include a sequence of values with a product equivalent to the volume of the anchor node, and
determining a function for each connection between the anchor nodes, based on the dimensions of the anchor nodes linked by the connection,
wherein the function for a respective one of the connections that links first and second ones of the anchor nodes includes one or more operations that transform the dimensions of the first anchor node to the dimensions of the second anchor node.

19. The method of claim 18, wherein the matrix is generated based on defined constraints for:

a size of the matrix, and
a range for one or more of the values.

20. The method of claim 18 or 19, wherein the volume of each anchor node of the plurality of anchor nodes is determined by:

reducing the one or more linear equations such that each linear equation represents a volume of a respective anchor node as a function of a volume of one or more input anchor nodes of the anchor nodes,
determining, from the reduced one or more linear equations, integer scale factors for the anchor nodes,
determining a minimum valid volume for the one or more input anchor nodes, using the integer scale factors,
selecting a volume for each of the one or more input anchor nodes, based on the minimum valid volume determined for each of the one or more input anchor nodes, and
calculating a volume for each of the remaining anchor nodes, based on the selected volume for each of the one or more input anchor nodes and the reduced linear equations.

100

Start

Receive a set of linear equations
102

Generate at least a portion of a neural network, using the set of linear equations, based, at least in part, on whether the at least a portion of the neural network is to produce a valid result, wherein the valid result includes a functional portion of the neural network
104

End

*Fig. 1*

DIRECTED GRAPH 206

ANCHOR NODES 204

| | 1 | 2 | 3 | 4 |
|---|---|---|---|---|
| 1 | -1 | 0 | 0 | 0 |
| 2 | 0.2 | -1 | 0 | 0 |
| 3 | 0 | 2.0 | -1 | 0 |
| 4 | 1.1 | 0.5 | 0.6 | -1 |

INPUT MATRIX 202

200

*Fig. 2A*

INPUT NODE
208

1

2

4

3

OUTPUT NODE
210

DIRECTED GRAPH
206

*Fig. 2B*

INPUT NODE
208

X1=25

X1

X2

X2=5

X4

X4=36

X3

X3=10

OUTPUT NODE
210

DIRECTED GRAPH
206

*Fig. 2C*

*Fig. 2D*

# SOLVE X1→X2

INPUT NODE
208

X1

X1=25→
[5,5]

OP

RESHAPE

REDUCE

212

X1: [5,5]
After Unary Op: [5,5]
After Reshape: [1,1,5,5]
After Reduce: [1,1,1,5]

X2

X2=5→
[1,1,1,5]

*Fig. 2E*

## SOLVE X2→X3

X2=5→
[1,1,1,5]

X2: [1,1,1,5]
After Unary Op: [1,1,1,5]
After Reshape: [1,1,5]
After Add: [2,1,5]

OP

RESHAPE

ADD

214

X3=10→
[2,1,5]

*Fig. 2F*

# RESULTING NEURAL NETWORK PORTION

INPUT NODE
208

X1=25→
[5,5]

X1

212

X2

X4

OUTPUT NODE
210

X2=5→
[1,1,1,5]

214

X4=36→
[18,2]

X3=10→
[2,1,5]

X3

DIRECTED GRAPH
206

*Fig. 2G*

| | 1 | 2 | 3 | 4 |
|---|---|---|---|---|
| 1 | -1 | 0 | 0 | 0 |
| 2 | 0.7 | -1 | 0 | 0 |
| 3 | 0 | 4 | -1 | 0 |
| 4 | 3 | 0.2 | 1.4 | -1 |

INPUT MATRIX
216

DIRECTED SUB-GRAPH
218

*Fig. 2H*

X1=25→
[5,5]

Y1=50→
[2,5,5]

Y2=5→
[5]

Y3=353→
[1,353,1]

Y4=140→
[20,7]

X2=5→
[1,1,1,5]

DIRECTED GRAPH
218

*Fig. 2I*

**Fig. 3**

To/From XBar 370

GPC 350

Pipeline Manager
410

PROP
415

DPC 420(V)

Primitive
Engine
435

MPC
430

SM
440

Raster Engine
425

WDX
480

MMU 490

To/From XBar 370

To/From XBar 370

*Fig. 4A*

To/From
XBar 370

Memory Partition Unit
380

ROP 450

L2 Cache 460

To/From
XBar 370

Memory Interface
470

To/From
Memory 304

*Fig. 4B*

SM 440

Instruction Cache 505

Scheduler Unit 510(K)

Dispatch 515

Register File 520

Core
550(L-1)

SFU
552(M-1)

LSU
554(N-1)

Interconnect Network 580

Shared Memory/L1 Cache 570

To/From MMU 490

*Fig. 5A*

*Fig. 5B*

**Fig. 5C**

600

Input Data
601

Data Assembly
610

Vertex Shading
620

Primitive Assembly
630

Geometry Shading
640

Viewport SCC
650

Rasterization
660

Fragment Shading
670

Raster Operations
680

Output Data
602

*Fig. 6*

Europäisches
Patentamt
European
Patent Office
Office européen
des brevets

**EUROPEAN SEARCH REPORT**

Application Number

EP 19 21 5331

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RUDY BUNEL ET AL: "A Unified View of Piecewise Linear Neural Network Verification", ARXIV.ORG, CORNELL UNIVERSITY LIBRARY, 201 OLIN LIBRARY CORNELL UNIVERSITY ITHACA, NY 14853, 30 November 2017 (2017-11-30), XP081316208, * Annex; figure 5 * | 1-20 | INV. G06F17/16 |
| A | Liwen Zhang: "TROPICAL GEOMETRY, NEURAL NETWORKS, AND LOW-COHERENCE FRAMES", Dissertation, 30 June 2018 (2018-06-30), XP055699217, UNIVERSITY OF CHICAGO Retrieved from the Internet: URL:https://newtraell.cs.uchicago.edu/files/phd_paper/liwenz.pdf [retrieved on 2020-05-28] * section 2.4; page 27 * | 1-20 | |
| A | JAEHONG YOON ET AL: "Lifelong Learning with Dynamically Expandable Networks", ARXIV.ORG, CORNELL UNIVERSITY LIBRARY, 201 OLIN LIBRARY CORNELL UNIVERSITY ITHACA, NY 14853, 4 August 2017 (2017-08-04), XP081318332, * figure 2 * | 1-20 | TECHNICAL FIELDS SEARCHED (IPC)<br><br>G06F |

-/--

The present search report has been drawn up for all claims

| Place of search | Date of completion of the search | Examiner |
|---|---|---|
| Berlin | 28 May 2020 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 19 21 5331

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HYUNBIN PARK ET AL: "Digital Neuron: A Hardware Inference Accelerator for Convolutional Deep Neural Networks", ARXIV.ORG, CORNELL UNIVERSITY LIBRARY, 201 OLIN LIBRARY CORNELL UNIVERSITY ITHACA, NY 14853, 16 December 2018 (2018-12-16), XP081023022, * section I * | 1-20 | |

----

TECHNICAL FIELDS
SEARCHED      (IPC)

The present search report has been drawn up for all claims

| Place of search | Date of completion of the search | Examiner |
|---|---|---|
| Berlin | 28 May 2020 | Virnik, Elena |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2